# EUROPÄISCHE PATENTSCHRIFT

(11) **EP 2 381 230 B1**
(45) Veröffentlichungstag und Bekanntmachung des Hinweises auf die Patenterteilung: **13.06.2018**
(21) Anmeldenummer: 10004328.0
(22) Anmeldetag: 23.04.2010
(51) Int. Cl.: G01J 3/46, G01J 3/52

(54) **Verfahren zur Erstellung von Überdruckvorhersagen**
Method for creating over-printing predictions
Procédé d'établissement de prédictions de surimpressions

(43) Veröffentlichungstag der Anmeldung: 26.10.2011
(73) Patentinhaber: GMG GmbH & Co. KG, 72072 Tübingen (DE)
(72) Erfinder: Hoffstadt, Johannes, 89077 Ulm (DE); Wurster, Jürgen, 72135 Dettenhausen (DE)
(74) Vertreter: Rausch Wanischeck-Bergmann Brinkmann

(56) Entgegenhaltungen:
- WO-A1-98/46008
- HERSCH R D ET AL: "Spectral reflection and dot surface prediction models for color halftone prints" JOURNAL OF ELECTRONIC IMAGING, Bd. 14, Nr. 3, 033001, Juli 2005 (2005-07), Seiten 1-12, XP002601998 SPIE-INT. SOC. OPT. ENG USA ISSN: 1017-9909 DOI: 10.1117/1.1989987
- RUCKDESCHEL F. R. ET AL: "Yule-Nielsen effect in printing: a physical analysis" APPLIED OPTICS, OPTICAL SOCIETY OF AMERICA, US, Bd. 17, Nr. 21, 1. November 1978 (1978-11-01), Seiten 3376-3383, XP002319741 ISSN: 0003-6935
- MATHIEU HÉBERT ET AL: "Extending the Clapper-Yule model to rough printing supports", JOURNAL OF THE OPTICAL SOCIETY OF AMERICA A, vol. 22, no. 9, 1 September 2005 (2005-09-01), page 1952, XP055352642, US ISSN: 1084-7529, DOI: 10.1364/JOSAA.22.001952
- DAVID R WYBLE ET AL: "A critical review of spectral models applied to binary color printing", COLOR RESEARCH & APPLICATION, vol. 25, no. 1, 29 December 1999 (1999-12-29), pages 4-19, XP055180756, US ISSN: 0361-2317, DOI: 10.1002/(SICI)1520-6378(200002)25:1<4::AID -COL3>3.0.CO;2-X

## Beschreibung

Die vorliegende Erfindung betrifft ein Verfahren zur Erstellung von Überdruckvorhersagen.

Im Stand der Technik ist es bekannt, dass, beispielsweise beim Verpackungsdruck, eine große Vielzahl von Sonderfarben verwendet werden, die im Druck miteinander durch Überdrucken kombiniert werden. Aus einem Bestand von tausenden von Sonderfarben werden einige, beispielsweise 8 bis 12 zu kombinierende Farben ausgewählt. In der Praxis entstehen dadurch viele, von Auftrag zu Auftrag verschiedene Farbsätze. Aus jedem solchen Farbsatz werden Zwischentöne erzeugt, indem Farbtonabstufungen zum Beispiel durch Aufrastern gebildet und diese schrittweise übereinander gedruckt werden. Insgesamt sind dadurch sehr viele Kombinationen sowohl an Zwischentönen als auch an Farbsätzen möglich.

Aus verschiedenen Gründen besteht ein Bedarf an Informationen über die Überdruckerscheinung. Dies kann beispielsweise zur Erstellung von Proofdrucken verwendet werden, zur möglichst farbgetreuen Darstellung auf einen Monitor, zur Ermittlung günstigerer Farbkombinationen mit gleicher Farbwirkung und so weiter. All diese Informationen werden üblicherweise auf den CIELAB-Wert einer Farbkombination im Druck zurückgeführt, welches ein standardisierter Wert ist und auf dem spektralen Reflexionsgrad basiert (L*a*b*-Farbraum der CIE, CIE Publikation 15-2004).

Da das Erscheinungsbild vom Trägermaterial ebenfalls abhängig ist, würde eine Überdruckvorhersage mit höchster Genauigkeit nur zu ermitteln sein, indem sämtliche Farbsätze mit ihren Druckfarben in sämtlichen Abstufungen und sämtlichen Überdruckkombinationen auf den jeweiligen Träger aufgebracht und ausgewertet werden. Ein derartiger Aufwand ist nicht wirtschaftlich. Gleichwohl ist es eine der im Stand der Technik bekannten Methoden, nach welcher hunderte und mehr Farbkombinationen als Farbfelder gedruckt werden müssen, die dann mit davon spektralanalytisch ermittelten Messwerten tabelliert werden. Die Messung erfasst nur den spektralen Reflexionsgrad jedes Feldes als Ganzes, also die insgesamte Zusammenwirkung des Beitrages jedes Farbanteils und des Druckträgers auf den Lichtdurchgang. Zwar werden nicht alle Überdruckkombinationen benötigt, aber je größer der Farbsatz ist, desto grober muss die Reduktion auf wenige Abstufungen pro Einzelfarbe werden. Mit Druck und Auswertung ist ein hoher Aufwand pro Farbsatz nötig.

In einer Abwandlung eines solchen zum Stand der Technik gehörenden Verfahrens werden Abstufungen der Einzelfarben auf einen teilweise vorbehandelten Druckträger gedruckt, das heißt auf unbedrucktes sowie schwarz und beispielsweise grau vorbedrucktes Substrat, aus denen gewisse spezifische Charakteristika der jeweiligen Druckfarbe ermittelt werden. Dieses Verfahren ist ebenfalls aufwändig, aber insbesondere vergleichsweise ungenau was Vorhersagen zu der Wirkung überdruckter Farben anbetrifft.

Die vorbekannten Systeme sind beispielsweise beschrieben in der WO 98/46008 beziehungsweise der US 0 094 209.

Die US 0 007 252 beschreibt im Rahmen einer Verbesserung der vorbekannten Verfahren die Anwendung des sogenannten Neugebauer-Modells für die Überdruckberechnung. Hier werden die Spektren der Einzelvolltöne einerseits und der Volltonüberdrucke andererseits verwendet. Ein entsprechend verbessertes System ist in der US 7 423 778 offenbart. Das dort beschriebene verbesserte Verfahren erfordert jedoch noch immer zwingend die Messung mehrerer Überdrucke, und zwar sowohl Volltöne auf Volltöne als auch Zwischentöne auf Volltöne.

Weiterhin werden in HERSCH R D ET AL, "Spectral reflection and dot surface prediction models for color halftone prints", J. Electronic Imaging, Vol. 14, Jul-Sep 2005, p. 033001-1 - 033001-12 Modelle zur Farbvorhersage diskutiert, bei denen eine mehrfache Reflexion des Lichts im Substrat berücksichtigt wird.

Ausgehend vom vorbeschriebenen Stand der Technik liegt der vorliegenden Erfindung die **Aufgabe** zugrunde, ein Verfahren der gattungsgemäßen Art dahingehend weiterzubilden, dass dieses bei möglichst verringertem Aufwand zuverlässigere Überdruckprognosen ermöglicht. Dabei soll insbesondere flexibel auf neue Farbkombinationen reagiert werden können, ohne dass die Qualität der Vorhersagen leidet.

Zur technischen **Lösung** dieser Aufgabe wird mit der Erfindung ein Verfahren mit den Merkmalen des Anspruches 1 vorgeschlagen. Weitere Vorteile und Merkmale ergeben sich aus den Unteransprüchen.

Gemäß dem erfindungsgemäßen Verfahren wird zunächst ausgegangen von den üblichen Vorgaben bei einem Druckvorhaben. Dies sind in der Regel der Druckträger einerseits und die zu verwendenden Druckfarben andererseits, z. B. Sonderdruckfarben und/oder die üblichen Prozessfarben. Je nach gewünschter Genauigkeit werden Tonwert-Abstufungen festgelegt, zum Beispiel beginnend mit 10% in 10%-Schritten bis zu 100% (Vollton). Darüber hinaus werden vorgegeben die Farbkombinationen als Angabe des Tonwertes jeder der gewünschten n-Druckfarben.

Erfindungsgemäß wird dann zunächst für jede der n-Druckfarben für sich eine Einzelfarbvorhersage getroffen. Diese umfasst drei Transmissionsanteile und die dazugehörigen Transmissionsspektren für jeden der Tonwerte.

Als Transmissionsanteil im Sinne der vorliegenden Erfindung wird der Anteil verstanden - unter Umständen auch als Weganteil zu bezeichnen - der sich ergibt durch die Betrachtung der Reflexion des Druckträgers selbst, des einfachen Durchgangs durch ein Druckfeld und des zweifachen Durchgangs.

Es erfolgt dann eine Bestimmung der Spektralwerte jedes durch das beschriebene Druckverfahren erzeugten Tonwertes und des Druckträgers. Diese Werte liegen entweder in Datenbanken oder sonstigen gesicherten Quellen vor, oder sie werden spektralanalytisch gemessen. In diesem Fall werden für jede der Farben Felder mit den jeweiligen Tonwerten gedruckt.

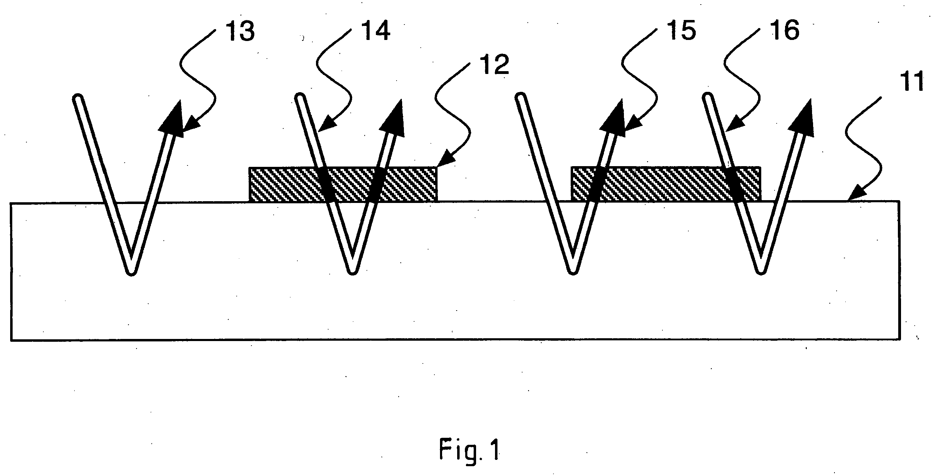

In Fig. 1 ist schematisch dargestellt, wie Lichtdurchgänge bei bedruckten Trägern unterschieden werden können. Die Besonderheit des erfindungsgemäßen Verfahrens besteht darin, dass die Messwerte aufgegliedert werden in den Anteil (13) des unbedruckten Trägers (11), den Anteil des einfachen Lichtdurchgangs (15, 16) durch die Farbschicht (12) und den des zweifachen Lichtdurchgangs (14) durch die Farbschicht (12). Damit werden die üblichen realitätsnahen Lichtwege berücksichtigt, denn im Allgemeinen findet im Druckträger neben der Reflexion auch eine seitliche Streuung des Lichtes statt. Das heißt, ein Lichtstrahl fällt auf einen Rasterpunkt, tritt hindurch, wird vom Druckträger reflektiert und wieder durch den bedruckten Bereich zurückgeworfen, durchläuft also die Farbschicht zweimal, oder ein Lichtstrahl tritt durch einen Rasterpunkt ein, wird im Träger gestreut und tritt an einer unbedruckten Stelle aus oder umgekehrt, was einem einfachen Lichtdurchgang durch die Farbschicht entspricht, oder schließlich wird der Lichtstrahl außerhalb von Rasterpunkten ausschließlich vom Druckträger reflektiert. Für jeden gedruckten Tonwert werden die prozentualen Anteile der drei Transmissionswege - als Transmissionsanteil bezeichnet - am gemessenen Spektrum bestimmt mit dem Ergebnis, dass der Tonwert dieser Druckfarbe aufgefasst wird als bestehend aus drei effektiven Flächenanteilen (im Sinne von Wahrscheinlichkeiten) mit ihren drei zugehörigen Transmissionsspektren.

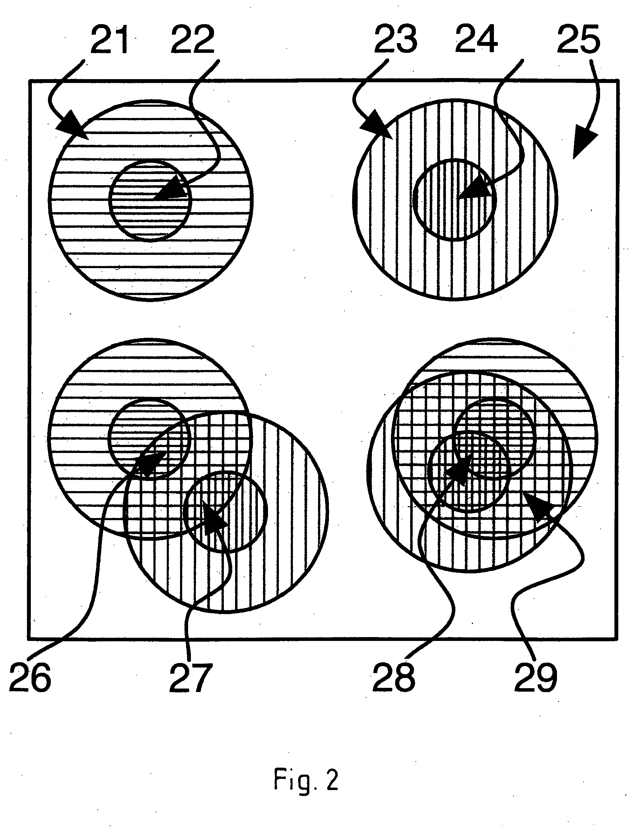

Dies berücksichtigend können nun wie in Fig. 2 gezeigt bei gegebener Druckreihenfolge mehrere solche Flächenzerlegungen übereinander gelegt werden. Bei zwei Farben entstehen beispielsweise 3 x 3 = 9 Kombinationen von Flächenanteilen. So gibt es die nicht überlappenden Anteile der einfachen (21) und zweifachen (22) Durchgangs durch die erste Farbe sowie des einfachen (23) und zweifachen (24) Durchgangs durch die zweite Farbe, den unbedruckten Anteil (25) und die überlappenden Anteile; einfacher Durchgang durch Farbe 2 mit zweifachem Durchgang durch Farbe 1 (26), umgekehrt (27), zweifacher Durchgang durch beide Farben (28) und einfacher Durchgang durch beide Farben (29).

Aus den Einzelwahrscheinlichkeiten wird die Wahrscheinlichkeit für jede Kombination berechnet. Aus der Summe der Beiträge all dieser Kombinationen mit ihrem jeweiligen spektralen Transmissionsverhalten kann ein entsprechender resultierender Wert ermittelt werden, der dann das Überdruckergebnis auf dem gegebenen Druckträger sehr präzise vorhersagt.

Gemäß einem vorteilhaften Vorschlag der Erfindung werden die einzelnen Tonwerte der Farbkombinationen abhängig vom Trägermaterial korrigiert. Hier können beispielsweise Benutzervorgaben einfließen. Weiterhin wird mit Vorteil vorgeschlagen, dass veränderte Tonwerte aufgrund des Einflusses der anderen beteiligten Druckfarben im Zusammendruck berücksichtigt werden. Hier können beispielsweise Farbannahmen in Bezug auf die Schichtdicke Einfluss halten.

Gemäß einem weiteren Vorschlag der Erfindung wird die Schichtdicke der jeweiligen Farbe im Rasterpunkt berücksichtigt, weil bekannt ist, dass je nach Rastertechnologie und Druckverfahren sich die Farbschichtdicken im Rasterpunkt von denen in der Vollfläche unterscheiden. Die Transmission und ggf. Streuung der Farbschicht verändert sich dadurch relativ zum Vollton. Dieser Effekt ist abhängig vom Tonwert und kann durch prozessabhängige Vorgabewerte oder durch mathematische Anpassung an Messdaten berücksichtigt werden.

Weiterhin werden im Rahmen der Erfindung neben der Druckreihenfolge auch die jeweiligen Druckprozesse berücksichtigt, da die Wahl des Druckprozesses (Inkjet, Offset, Flexodruck, Tiefdruck usw.) natürlich einen Einfluss auf die Bestimmung der o. g. Wahrscheinlichkeitswerte oder Schichtdicken haben kann.

Mit besonderem Vorteil wird vorgeschlagen, dass die Einzelfarbvorhersagen durch folgende Schritte ermittelt werden:
a) für den unbedruckten Träger wird der spektrale Reflexionsgrad ermittelt,
b) für jede Stufe der Abstufung einer Druckfarbe wird der spektrale Reflexionsgrad ermittelt,
c) für jede Stufe der Abstufung einer Druckfarbe wird unter Verwendung des ermittelten spektralen Reflexionsgrades der spektrale Transmissionsgrad der Farbschicht ermittelt, und zwar sowohl
   i) für einen einfachen und
   ii) einen zweifachen Lichtdurchgang,
d) für jede Stufe werden die Transmissionsanteile des Trägers, des einfachen und des zweifachen Lichtdurchgangs ermittelt,
e) für jede Stufe wird aus den ermittelten Transmissionsanteilen, den ermittelten spektralen Transmissionsgraden und dem ermittelten spektralen Reflexionsgrad des Trägers ein Reflexionsspektrum vorhergesagt.

Diese bereits eingangs genannte vorteilhafte Weise der Einzelfarbvorhersage erbringt sehr qualifizierte Reflexionsspektren für die einzelnen Farben. Dadurch werden auch die auf diesen Werten basierenden Überdruckvorhersagen überaus realitätsnah und qualifiziert.

Grundsätzlich können gemäß einer vorteilhaften erfindungsgemäßen Vorgehensweise die entsprechenden Werte durch spektralfotometrische Messung ermittelt werden. Allerdings gibt es für viele Farben auch bereits ausreichende Messwerte, die Datenbanken entnommen werden können. Darüber hinaus kann mit den erfindungsgemäß ermittelten Werten wiederum eine Datenbank aufgefüllt werden.

Für die Ermittlung der einzelnen Werte können unterschiedliche Vorgehensweisen angewandt werden. Jeder der drei Wege hat sein eigenes Transmissionsspektrum, d.h. seine eigene Art das Licht beim Durchgang zu filtern. Interessant sind dabei nur der einfache und der zweifache Durchgang. Der nullfache Weg filtert nicht, sein Transmissionsspektrum ist für alle Wellenlängen = 1. Messen kann man nur das Reflexionsspektrum als Gesamterscheinung, bei dem das Licht anteilig die drei verschiedenen Wege nimmt, und jeder der drei Wege seine eigene Filterung hat. In Reflexion misst man das Gesamtergebnis. Die einzelnen Komponenten werden z.B. über physikalische Annahmen errechnet.

So kann der spektrale Transmissionsgrad der zweifach durchlaufenen Farbschicht aus dem spektralen Reflexionsgrad des Trägers einerseits und des Volltons ermittelt werden. Für den spektralen Transmissionsgrad der einfach durchlaufenen Farbschicht wiederum kann der spektrale Transmissionsgrad der zweifach durchlaufenen Farbschicht herangezogen werden. Gemäß einem weiteren Vorschlag der Erfindung kann der spektrale Transmissionsgrad der einfach und der zweifach durchlaufenen Farbschicht durch die Abweichung des vorhergesagten Reflexionsspektrums vom ermittelten spektralen Reflexionsgrad korrigiert werden. Entsprechend kann in vorteilhafter Weise auch so vorgegangen werden, dass die Transmissionsanteile des Trägers, des einfachen und des zweifachen Lichtdurchgangs aus dem spektralen Reflexionsgrad und den Transmissionsgraden ermittelt werden.

Gemäß einem weiteren vorteilhaften Vorschlag der Erfindung werden die drei Transmissionsanteile des Trägers, des einfachen und des zweifachen Lichtdurchgangs aus einer vorgegebenen Tonwertkurve und zusätzlichen Angaben zu Raster und Druckprozess ermittelt.

Die jeweilige Vorgehensweise ist jeweils bestimmend für die Qualität der schlussendlich ermittelten Vorhersagen.

Gemäß einem vorteilhaften Vorschlag der Erfindung können die zwischen den definierten Tonwerten liegenden Werte der jeweiligen Farben durch Interpolation komplettiert werden, was zwar Ungenauigkeiten in das Gesamtsystem bringt, aber je nach Einzeldruckvorhaben ausreichend sein kann. Der Grad der gewünschten Genauigkeit bestimmt den Grad der zu wählenden Raster.

Zunächst werden also für jede der n-Druckfarben Einzelfarbenvorhersagen umfassend drei Transmissionsanteile und die dazugehörigen Transmissionsspektren für den jeweiligen Tonwert ermittelt, so dass ihre anteilige Mischung wieder genau den Reflexionsspektren der vorgegebenen Tonwertstufen entspricht.

Während eine Vielzahl von Methoden bekannt sind, Einzelfarbvorhersagen zu treffen, ist an dem in Patentanspruch 6 gekennzeichneten Verfahren, welches auch unabhängig von der Überdruckvorhersage neu und erfinderisch ist, neu, dass dieses insbesondere empirische Korrekturen mit einfließen lässt. Im Stand der Technik wird lediglich ein unabhängiges Spektrum und eine geometrische Flächenbedeckung erzeugt, aus welcher alle Werte abgeleitet werden. Das Reflexionsspektrum wird nicht wieder zu dem ursprünglichen Wert zusammengesetzt.

Da die Erfindung die Farbdeckung realitätsnah durch Transmissionsanteile beschreibt, lassen sich veränderte Verhältnisse von Flächenbedeckung und Schichtdicke im Überdruck im Vergleich zur Einzelfarbe vorteilhaft beschreiben:
In der Drucktechnik ist bekannt, dass Druckfarbe auf unbedrucktem Papier anders angenommen wird als auf (schon mit einer anderen Farbe) bedrucktem Papier. Die üblichen Farbannahmeformeln drücken das entweder als Veränderung der Schichtdicke oder als Abperlen, d.h. Abnahme der Flächendeckung, aus. Das wird in der Erfindung mit Vorteil eingesetzt.

Auch ist anzunehmen, dass die Messung der Flächendeckung eines Tonwertes einer Farbe sich für bedrucktes und unbedrucktes Papier unterscheidet. Dieser Effekt ist Ausdruck einer veränderten Oberflächenwechselwirkung (etwa in Form von Haften und Kleben) und kann auf verschiedene Weise empirisch als Veränderung der Tonwerte im Zusammendruck berücksichtigt werden. Diese sogenannte Berücksichtigung der Farbannahme ist eine der weiteren vorteilhaften Aspekte der vorliegenden Erfindung.

Es ist bekannt, dass Druckfarben nicht perfekt transparent sind, sondern zu einem gewissen Grad das Licht streuen, d.h. aus dem geradlinigen Strahlverlauf ablenken. Daher können Überdrucke von Druckfarben besser beschrieben werden, wenn sowohl ihre Transmission als auch ihr Streuverhalten berücksichtigt werden. Das Streuverhalten einer Farbe kann z.B. ermittelt werden, indem man sie auf eine andere Farbe druckt (vorzugsweise Schwarz) und das gemessene Spektrum mit einer reinen Transmissionsrechnung vergleicht. Durch Streuung der oberen Farbe gelangt Licht wieder nach außen, ohne die untere Farbe erreicht zu haben. Das Ergebnis ist heller als es nach der reinen Transmissionsrechnung zu erwarten wäre. Diese Berücksichtigung der sogenannten Streuwirkung ist ebenfalls ein vorteilhafter Aspekt der vorliegenden Erfindung.

Weiterhin ermöglicht die Erfindung die Berücksichtigung der Oberflächenreflexion. Die Grenzfläche zwischen Luft und Papier oder Druckfarbe reflektiert nach den Gesetzen der Optik einen Teil des auftreffenden Lichtes. Das von außen auftreffende Messlicht dringt daher nicht vollständig in das Medium ein. Ebenso wird das innen zurückkehrende Licht teilweise zurückgehalten. Die Interpretation der spektralen Messdaten an Farbschichten kann verbessert werden, wenn diese Effekte berücksichtigt werden.

Schließlich ermöglicht die Erfindung auch eine Berücksichtigung der sogenannten Bedeckungsstruktur. Der Farbauftrag im Druckprozess ist nicht völlig homogen. Besonders im Offsetdruck führen die sehr zähen Farben zur Fadenbildung. Der Farbfaden reißt ab und legt sich vorwiegend in Vorschubrichtung auf dem Papier ab. Oft ist die Papieroberfläche wesentlich rauer als die Dicke der Farbschicht, was zu Kontaktproblemen und unvollständigem Farbauftrag führt. Die unvollständige Bedeckung kann z.B. durch Restflächenanteile unbedruckten Papiers auch im Vollton im Vorhersagemodell beschrieben werden.

Das erfindungsgemäße Verfahren ist vergleichsweise einfach und gegenüber vorbekannten Verfahren ist der Aufwand reduziert, da nur im überschaubaren Maße gedruckt und ausgewertet werden muss, wobei zusätzlich auf bereits bekannte Werte zurückgegriffen werden kann. Die Spektren der Transmission bei einfachem und zweifachen Durchgang können beispielsweise an den Volltondruckfeldern ermittelt und auf die anderen Werte umgesetzt werden. Auch kann hier mit einer geringen Anzahl von Stützpunkten gearbeitet werden. Trotz des vergleichsweise geringen Aufwandes in Bezug auf Druck, Spektralanalyse und Auswertung ergeben sich vergleichsweise genaue Überdruckvorhersagen, insbesondere unter Berücksichtigung von Schichtdicke, Druckprozess und Druckreihenfolge.

Weitere Vorteile und Merkmale der Erfindung ergeben sich aus der folgenden Beschreibung anhand der Figuren. Dabei zeigen:
Fig. 1 eine schematische Darstellung von Strahlendurchgängen durch einen bedruckten Träger;
Fig. 2 eine schematische Darstellung von Überdruckverhältnissen zweier Farben;
Fig. 3 ein Flussdiagramm zur Verdeutlichung des Ablaufes zur Ermittlung der spektralen Transmissionen und Transmissionsanteile;
Fig. 4 ein Flussdiagramm zur Erläuterung einer Variante des Ablaufes gemäß Fig. 3;
Fig. 5 ein Flussdiagramm zur Erläuterung des Ablaufes zur Ermittlung eines Überdruckergebnisses und
Fig. 6 ein Flussdiagramm zur Erläuterung von Ergänzungen zu dem Ablauf gemäß Fig. 5.

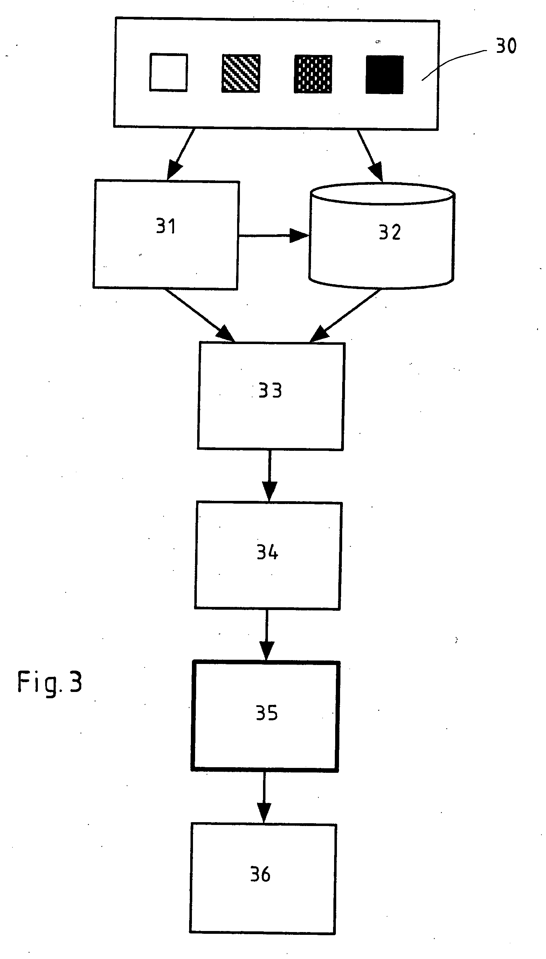

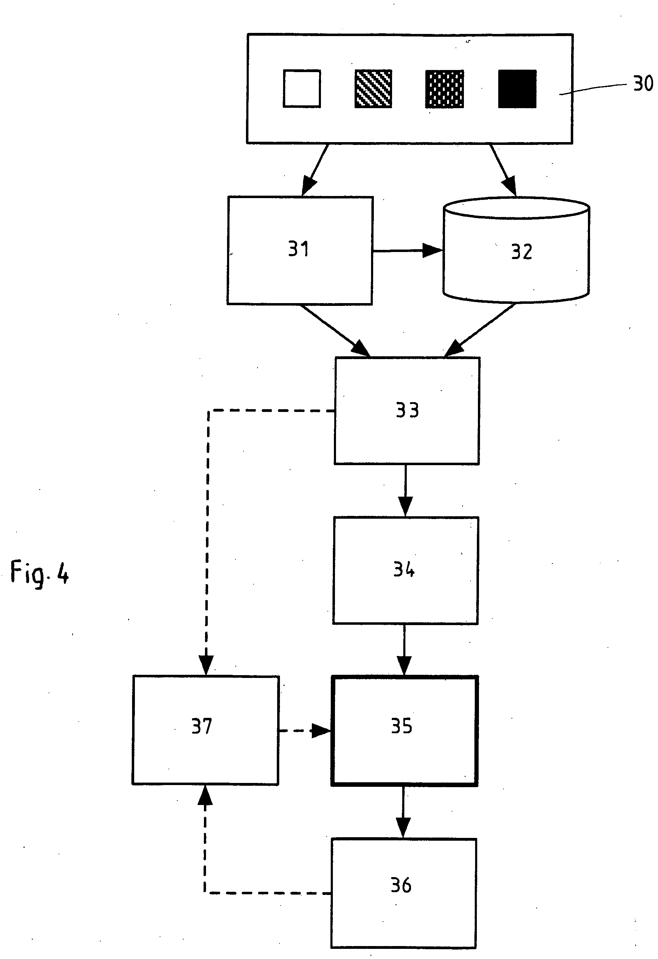

Die Fign. 3 und 4 sind Flussdiagramme zur Erläuterung des Ablaufes einer Ermittlung von Transmissionsanteilen für Druckfarben. Gleiche Verfahrensstufen sind in den Figuren mit gleichen Bezugszeichen versehen. Fig. 4 stellt eine Variante des Verfahrens dar. Zunächst wird in einer ersten Stufe 30 eine Farbe in unterschiedlichen Rasterstufen einschließlich 0% und 100% auf einen Träger gedruckt. Es wird dann entweder durch Messung 31 oder durch Auffinden des Wertes in einer Datenbank 32 die spektrale Reflexion sowohl des Trägers als auch jeder gedruckten Stufe der Farbe im Verfahrensschritt 33 ermittelt. Die in Stufe 34 durchgeführte Analyse dient der Ermittlung der spektralen Transmissionen und ihre Anteile für jede Stufe der Farbe.

Es sind somit folgende Informationen 35 für jede Stufe der jeweils gedruckten Farbe bekannt:
- die spektrale Reflexion des Druckträgers
- die spektrale Transmission für den einfachen Durchgang
- die spektrale Transmission für den zweifachen Durchgang sowie
- der Transmissionsanteil des nullfachen Durchgangs
- Transmissionsanteil des einfachen Durchgangs und
- Transmissionsanteil des zweifachen Durchgangs.

Es lässt sich somit in der Stufe 36 aus den vorhandenen Informationen im Rahmen einer Resynthese eine Vorhersage über die spektrale Reflexion jeder Stufe einer Farbe treffen.

Bei der in Fig. 4 dargestellten Variation dieses Verfahrens wird eine Korrektur der Ergebniswerte durchgeführt. Die gemessenen oder der Datenbank entnommenen spektralen Reflexion sowohl des Trägers als auch jeder Stufe der Farbe aus dem Verfahrensschritt 33 einerseits und die im Verfahrensschritt 36 getroffenen Vorhersagen der spektralen Reflexion jeder Stufe der Farbe werden auf Abweichungen überprüft und Korrekturwerte der jeweiligen spektralen Transmissionen und ihrer Anteile für jede Stufe der Farbe ermittelt. Diese fließen als Korrektur in die Ergebnisse im Schritt 35 mit ein.

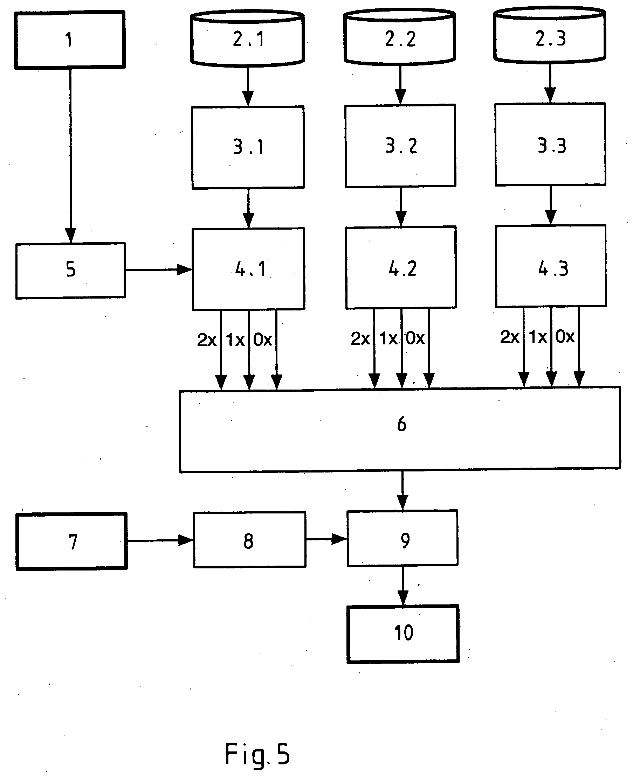

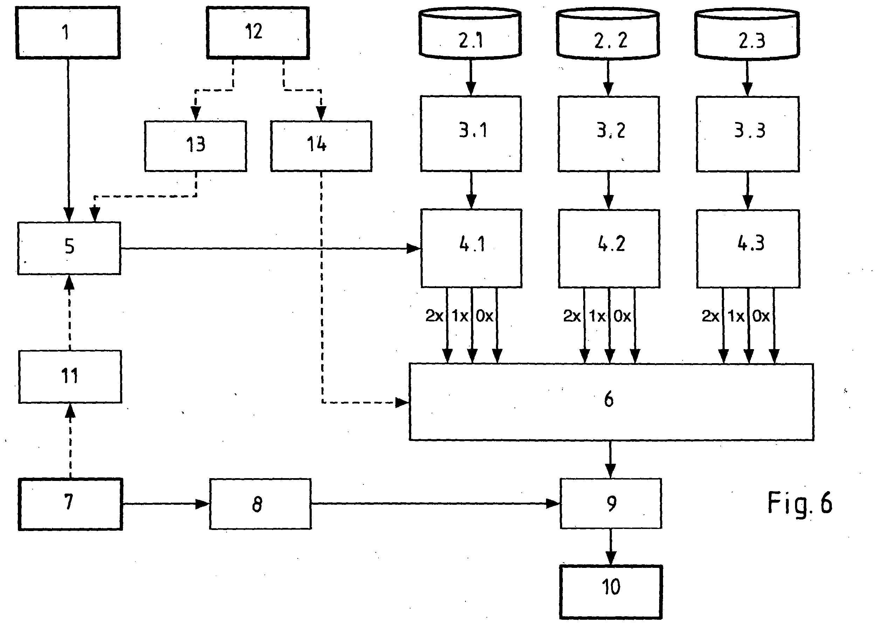

Die Fign. 5 und 6 stellen flussdiagrammartig die Ermittlung einer Überdruckvorhersage dar, wobei in Fig. 6 Ergänzungen beziehungsweise Varianten des Grundverfahrens gezeigt sind. Gleiche Verfahrensschritte sind auch hier mit gleichen Bezugszeichen versehen.

Vorgegeben ist eine gewünschte Farbkombination 1 die einfließt in die Angabe der Tonwerte der n Druckfarben, Schritt 5.

Für jede der n Druckfarben 2.1, 2.2, 2.3 und so weiter wird jeweils eine Einzelfarbvorhersage in den Schritten 3.1, 3.2, 3.3 getroffen, aus welcher sich die spektralen Transmissionen und ihre Anteile für bekannte Stufen ergeben. Unter Berücksichtigung der Tonwerte der n Druckfarben aus Schritt 5 erfolgt nun für jede der n Druckfarben in den Schritten 4.1, 4.2, 4.3 usw. die Ermittlung der spektralen Transmission und ihre Anteile für den jeweils gewünschten Tonwert. Hierfür wird Interpolation eingesetzt. Die entsprechenden Transmissionen und ihre Anteile für den nullfachen, den einfachen und den zweifachen Durchgang für alle Druckfarben 1 bis n werden nun im Schritt 6 zu den (3 hoch n) Durchgangsmöglichkeiten kombiniert, um durch Überlagerung der spektralen Transmissionen und ihrer Anteile zu effektiven Transmissionsspektren und Wahrscheinlichkeiten für jede Kombination zu gelangen.

Eine weitere Vorgabe ist der gewünschte Druckträger 7, dessen spektrale Reflexion im Schritt 8 ermittelt oder einer Datenbank entnommen wird. Diese spektrale Reflexion des Trägers des Schrittes 8 wird im Rahmen einer Synthese mit allen Kombinationsanteilen und ihren Transmissionsspektren im Schritt 9 kombiniert. Es ergibt sich daraus das Ergebnis im Schritt 10, nämlich das Reflexionsspektrum des Überdrucks von gewünschten Tonwerten auf einem gewünschten Träger.

Die unterschiedlichen Varianten, die sich aus Fig. 6 ergeben, betreffen in erster Linie Korrekturen beziehungsweise Verfeinerungen des Verfahrens.

Die Festlegung des Druckverfahrens und der Druckreihenfolge 12 können unterschiedliche Auswirkungen haben. Sie können beispielsweise im Schritt 13 zu veränderten Tonwerten im Zusammendruck führen, die direkt auf die Angabe der Tonwerte der n Druckfarben im Schritt 5 Einfluss nehmen.

Auch können die Vorgaben im Schritt 12, also Druckverfahren und/oder Druckreihenfolge, Auswirkungen auf veränderte Schichtdicken im Zusammendruck 14 haben. Diese Schichtdickenergebnisse wiederum können direkt zur Korrektur der spektralen Transmissionen in den Schritt 6 der Überlagerung aller spektralen Transmissionen und ihrer Anteile einfließen.

Als weitere Verfeinerung können die Tonwerte in Abhängigkeit vom Trägermaterial 7 im Schritt 11 korrigiert werden, was wiederum direkten Einfluss auf die Tonwerte der n Druckfarben im Schritt 5 hat.

Die anhand der Figuren beschriebenen Ausführungsbeispiele dienen nur der Erläuterung und sind nicht beschränkend. Insbesondere sind unterschiedliche Kombinationen der einzelnen Verfahrensschritte ebenso im Rahmen der Erfindung wie Variationen einzelner Schritte.

## Patentansprüche

1. Verfahren zur Erstellung der Überdruckvorhersage für eine Farbkombination, wobei ein Druckträger und wenigstens zwei Druckfarben, je Druckfarbe eine Abstufung von Tonwerten inklusive Vollton sowie Farbkombinationen als Angabe des Tonwertes jeder der n Druckfarben vorgegeben sind, wobei
a) zunächst für jede der n Druckfarben Einzelfarbvorhersagen umfassend drei Transmissionsanteile (Träger, einfacher Lichtdurchgang, zweifacher Lichtdurchgang) mittels der zugehörigen, aus dem spektralen Reflexionsgrad des unbedruckten Trägers und dem spektralen Reflexionsgrad des Volltons herleitbaren Transmissionsspektren für den jeweiligen Tonwert ermittelt werden,
b) für eine beabsichtigte Farbkombination (3 hoch n) Kombinationen der Transmissionsanteile und die zugehörigen kombinierten Transmissionsspektren ermittelt werden und
c) durch Überlagerung der ermittelten Transmissionsanteile mit ihren Transmissionsspektren und aus dem spektralen Reflexionsgrad des unbedruckten Trägers ein gesamtes Reflexionsspektrum eines Überdruckes vorhergesagt wird.

2. Verfahren nach Anspruch 1, **dadurch gekennzeichnet, dass** die Tonwerte in der Kombination abhängig vom Trägermaterial (z. B. durch Benutzervorgaben) korrigiert werden.

3. Verfahren nach einem der Ansprüche 1 oder 2, **dadurch gekennzeichnet, dass** veränderte Tonwerte aufgrund des Einflusses der anderen beteiligten Druckfarben im Zusammendruck berücksichtigt werden.

4. Verfahren nach einem der vorhergehenden Ansprüche, **dadurch gekennzeichnet, dass** die Druckreihenfolge festgelegt wird.

5. Verfahren nach einem der vorhergehenden Ansprüche, **dadurch gekennzeichnet, dass** der beabsichtigte Druckprozess berücksichtigt wird.

6. Verfahren nach einem der vorhergehenden Ansprüche, wobei Einzelfarbvorhersagen durch folgende Schritte ermittelt werden :
a) für den unbedruckten Träger wird der spektrale Reflexionsgrad ermittelt,
b) für jede Stufe der Abstufung einer Druckfarbe einschließlich des Volltons wird der spektrale Reflexionsgrad ermittelt,
c) für jede Stufe der Abstufung einer Druckfarbe wird unter Verwendung der ermittelten spektralen Reflexionsgrade das Transmissionsspektrum der Farbschicht ermittelt, und zwar sowohl
i) für einen einfachen und
ii) einen zweifachen Lichtdurchgang,
d) für jede Stufe werden die Transmissionsanteile des Trägers, des einfachen und des zweifachen Lichtdurchgangs aus dem spektralen Reflexionsgrad und den Transmissionsspektren ermittelt,
e) für jede Stufe wird aus den ermittelten Transmissionsanteilen, den ermittelten Transmissionsspektren und dem ermittelten spektralen Reflexionsgrad des Trägers ein Reflexionsspektrum vorhergesagt.

7. Verfahren nach Anspruch 6, **dadurch gekennzeichnet, dass** der spektrale Reflexionsgrad ermittelt wird durch den Druck von Farbfeldern in den vorgegebenen Tonwertstufen auf den Träger mit anschließender spektralfotometrischer Messung.

8. Verfahren nach einem der vorhergehenden Ansprüche 6 oder 7, **dadurch gekennzeichnet, dass** das Transmissionsspektrum der zweifach durchlaufenen Farbschicht aus dem spektralen Reflexionsgrad des Trägers und des Volltons ermittelt wird.

9. Verfahren nach einem der vorhergehenden Ansprüche 6 bis 8, **dadurch gekennzeichnet, dass** das Transmissionsspektrum der einfach durchlaufenen Farbschicht aus dem Transmissionsspektrum der zweifach durchlaufenen Farbschicht ermittelt wird.

10. Verfahren nach einem der vorhergehenden Ansprüche 6 bis 9, **dadurch gekennzeichnet, dass** die Transmissionsspektren der einfach und zweifach durchlaufenen Farbschicht durch die Abweichung des vorhergesagten Reflexionsspektrums zum ermittelten spektralen Reflexionsgrad korrigiert werden.

11. Verfahren nach einem der vorhergehenden Ansprüche 6 bis 10, **dadurch gekennzeichnet, dass** die drei Transmissionsanteile des Trägers, des einfachen und des zweifachen Lichtdurchgangs aus einer vorgegebenen Tonwertkurve und Angaben zu Raster und Druckprozess ermittelt werden.

12. Verfahren nach einem der vorhergehenden Ansprüche 6 bis 11, **dadurch gekennzeichnet, dass** zwischen den Stufen liegende Tonwerte (in den drei Transmissionsanteilen und/oder den Transmissionsspektren) interpoliert werden.

## Claims

1. A method for creating an over-printing prediction of a colour combination, wherein a print medium and at least two printing inks, a gradation of tonal values including full tone colour as well as colour combinations as indication of the tonal value of each of the n printing inks are provided, wherein
a) at first individual colour predictions comprising three transmission parts (medium, simple light transmission, double light transmission) are determined for each one of the n printing inks by means of the associated transmission spectra that can be deduced from the spectral coefficient of reflection of the blank medium and the spectral coefficient of reflection of the full tone for the respective tonal value,
b) combinations of the transmission parts and the associated combined transmission spectra will be determined for an intended colour combination (3 to the power of n) and
c) a total reflection spectrum of an over-printing will be predictied by overlaying the determined transmission parts with the transmission spectra thereof and by the spectral coefficient of reflection of the blank medium.

2. A method according to claim 1, **characterized in that** the tonal values in the combination will be corrected in dependence on the material of the medium (for example by means of user settings).

3. A method according to one of the claims 1 or 2, **characterized in that** modified tonal values due to the influence of the other involved printing inks will be taken into account in combined printing.

4. A method according to one of the preceding claims, **characterized in that** the printing sequence will be determined.

5. A method according to one of the preceding claims, **characterized in that** the intended printing process will be taken into account.

6. A method according to one of the preceding claims, wherein individual colour predictions will be determined by the following steps:
a) the spectral coefficient of reflection will be determined for the blank medium,
b) the spectral coefficient of reflection will be determined for each step of the gradation of a printing ink including the full tone,
c) the transmission spectrum of the colour layer will be determined for each step of the gradation of a printing ink using the determined spectral coefficients of reflection, and this both
i) for a simple and
ii) a double light transmission,
d) the transmission parts of the medium, the simple and the double light transmission will be determined for each step from the spectral coefficient of reflection and the transmission spectra,
e) a reflection spectrum will be predicted for each step on the base of the determined transmission parts, the determined transmission spectra and the determined spectral coefficient of reflection of the medium.

7. A method according to claim 6, **characterized in that** the spectral coefficient of reflection is determined by printing colour fields in the predefined tonal value gradations on the medium with a subsequent spectrophotometric measurement.

8. A method according to one of the preceding claims 6 or 7, **characterized in that** the transmission spectrum of the colour layer that has been passed through twice will be determined on the base of the spectral coefficient of reflection of the medium and the full tone.

9. A method according to one of the preceding claims 6 through 8, **characterized in that** the transmission spectrum of the colour layer that has been passed through once will be determined from the transmission spectrum of the colour layer that has been passed through twice.

10. A method according to one of the preceding claims 6 through 9, **characterized in that** the transmission spectra of the colour layers that have been passed through once and twice will be corrected by the deviation of the predicted reflection spectrum from the determined spectral coefficient of reflection.

11. A method according to one of the preceding claims 6 through 10, **characterized in that** the three transmission parts of the medium, the simple and the double light transmission will be determined from a predefined tone curve and information about the screen and the printing process.

12. A method according to one of the preceding claims 6 through 11, **characterized in that** tonal values between the steps (in the three transmission parts and/or the transmission spectra) will be interpolated.

## Revendications

1. Procédé d'établissement de prédictions de surimpressions pour une combinaison de couleurs, dans lequel un support d'impression et au moins deux encres d'impression, une gradation de valeurs tonales pour chaque encre d'impression, la teinte homogène ainsi que des combinaisons de couleurs y compris, sont donnés comme des indications de la valeur tonale des n encres d'impression, dans lequel
a) d'abord des prédictions individuelles de couleur comprenant trois parties de transmission (le support, la simple transmission de lumière, la double transmission de lumière) sont déterminées pour chacune des n encres d'impression par moyen des spectres de transmission associés, qui peuvent être déduits de la réflectance spectrale du support non-imprimé et de la réflectance spectrale de la teinte homogène,
b) des combinaisons des parties de transmission et les spectres de transmission combinés associés sont déterminés pour une combinaison de couleurs envisagée (3 puissance n) et
c) un spectre entier de réflectance d'une surimpression sera prédit en superposant les parties de transmission déterminées par leurs spectres de transmission et à partir de la réflectance spectrale du support non imprimé.

2. Procédé selon la revendication 1, **caractérisé en ce que** les valeurs tonales dans la combinaison sont corrigées en fonction du matériau du support (par exemple par moyen de dispositions de l'utilisateur).

3. Procédé selon l'une des revendications 1 ou 2, **caractérisé en ce que** des valeurs tonales modifiées en raison de l'influence des autres encres d'impression impliquées sont considérées dans l'impression combinée.

4. Procédé selon l'une des revendications précédentes, **caractérisé en ce qu'**on détermine l'ordre d'impression.

5. Procédé selon l'une des revendications précédentes, **caractérisé en ce que** le procédé d'impression envisagé est considéré.

6. Procédé selon l'une des revendications précédentes, dans lequel des prédictions de couleur individuelle sont déterminées par les étapes suivantes :
a) on détermine la réflectance spectrale du support non-imprimé,
b) on détermine la réflectance spectrale de chaque niveau de la gradation, la teinte homogène y compris,
c) on détermine le spectre de transmission de la couche de couleur de chaque niveau de la gradation d'une encre d'impression en utilisant les réflectances spectrales déterminées, à savoir
i) pour une simple et
ii) pour une double transmission de lumière,
d) on détermine les parties de transmission du support, de la simple transmission de lumière et de la double transmission de lumière pour chaque niveau à partir de la réflectance spectrale et des spectres de transmission,
e) on prédit un spectre de réflectance pour chaque niveau à partir des parties de transmission déterminées et de la réflectance spectrale du support.

7. Procédé selon la revendication 6, **caractérisé en ce que** la réflectance spectrale est déterminée en imprimant des champs de couleur sur les niveaux de valeur tonale prédéfinis sur le support, suivi par une mesure de spectrophotométrie.

8. Procédé selon l'une des revendications précédentes 6 ou 7, **caractérisé en ce que** le spectre de transmission de la couche de couleur traversée deux fois est déterminé à partir de la réflectance spectrale du support et de la teinte homogène.

9. Procédé selon l'une des revendications précédentes 6 à 8, **caractérisé en ce que** le spectre de transmission de la couche de couleur traversée une fois est déterminé à partir du spectre de transmission de la couche de couleur traversée deux fois.

10. Procédé selon l'une des revendications précédentes 6 à 9, **caractérisé en ce que** les spectres de transmission de la couche de couleur traversée une fois et de la couche de couleur traversée deux fois sont corrigés par la déviation du spectre de réflectance prédit de la réflectance spectrale déterminée.

11. Procédé selon l'une des revendications précédentes 6 à 10, **caractérisé en ce que** les trois parties de transmission du support, de la simple transmission de lumière et de la double transmission de lumière sont déterminées à partir d'une courbe de valeurs tonales prédéfinie et à partir des informations sur la trame et le procédé d'impression.

12. Procédé selon l'une des revendications précédentes 6 à 11, **caractérisé en ce que** des valeurs tonales entre les niveaux (dans les trois parties de transmission et/ou les spectres de transmission) sont interpolées.
